# EUROPEAN PATENT APPLICATION

(11) **EP 1 978 389 A1**
(43) Date of publication of application: **08.10.2008**
(21) Application number: 07251455.7
(22) Date of filing: 02.04.2007
(51) Int. Cl.: G02B 6/44

(54) **Blown cable installation**

(71) Applicant: BRITISH TELECOMMUNICATIONS public limited company, London EC1N 7AJ (GB)
(72) Inventor: The designation of the inventor has not yet been filed
(74) Representative: Williamson, Simeon Paul

(57) **Abstract**

Apparatus for installing a cable into a tube with the assistance of a fluid drag acting on the cable within the tube, the apparatus including:
- installation means for driving the cable into the tube, wherein in use the cable is resistant to being conveyed to the installation means, and
- reduction means for reducing the conveyance resistance of the cable.

## Description

This invention relates to methods, apparatus and systems related to the installation of cable into a conduit or a duct, particularly but not exclusively to the installation of fibre cable or minicable using a supply of compressed air to provide a fluid drag effect on the cable within the tube to assist in the installation.

Methods and apparatus of installing "blown fibre" are well known, wherein one or usually more of a number of optical fibres are "blown" into a previously laid conduit or tube with the assistance of a fluid drag to propel the fibre(s) along, as described in e.g. EP108590. Currently, this method is used by the applicant to install single fibres or more usually, a fibre unit comprising a number of individual fibres. An optical fibre measures mere microns in diameter, and the versions of blown fibre units installed by blowing techniques require little strengthening, so such fibre units are relatively lightweight and pliable. One version of a fibre unit used by the applicant. known as Enhance Performance Fibre Units (EPFUs) is about 1 to 2 mm in diameter.

Installation of blown fibre is performed using a "blowing head" which essentially comprises a pair of electrically-powered drive wheels between which the fibre unit is driven into a tube coupled to the blowing head. A compressor is connected to the blowing head which directs a supply of compressed air into the tube through which the fibre unit is being driven. Various versions of blowing heads are known, such as those described in EP108590 *(supra.),* WO98/12588, or WO2006/103424. As noted above, the fibre unit being installed is lightweight and pliable and susceptible to buckling especially as the tube which the fibre unit is to occupy may be more a kilometre long. In such cases, friction within the tube may slow down or even stop the progress of the fibre unit within the tube. Parts of the fibre unit could also get caught within the fibre tube, and the reduction or cessation of movement of the fibre unit into the tube is transmitted back to the blowing head.

To deal with the ill effects of fibre buckle (which may include compromise of fibre integrity in performance or even physical terms), the blowing head covered by WO2006/103424 *(supra.)* (referred to here as the "current capping" blowing head or method) includes a feature of the invention provides that the electrical current supplied to the drive wheels is capped. When the progress of the fibre unit slows or stops, this is transmitted to the drive wheels, which correspondingly slows or stops to avoid putting excessive force on the fibre captured between the drive wheels.

Blown fibre is a significant installation technique in the push for Fibre to the Home (FTTH), wherein an all-optical network is envisaged to supply customers (i.e. private, residential customers in addition to commercial or industrial parties) with an optical connection between the access network direct to the customer's premises or home, or at least a good way thereto. As optical fibre is rolled out deeper into the access network however, capacity and congestion in optical fibre ducts is fast becoming a serious problem. One solution is the use of fibre cables, which consist of between 12 to 288 loose tube fibres or ribbon fibre- disposed, in some cases, individual "loose tube" fibres (typically 8 to 12 fibres per loose tube) housed in a polymer outer sheath, and are typically more than 10 mm in diameter. They therefore provide a much higher fibre count than fibre units for the space they occupy in the fibre ducts and are increasingly being deployed in preference to fibre units where space is scarce.

A slightly smaller sized fibre cable called "minicables" (also known as "microcables") is also deployed. It is configured in much the same way as fibre cables, but with a smaller fibre count of between 12 to 96 fibres, measuring about 5 to 7 mm in diameter. The term "cable" used in this description shall refer to either or both such cables, where the context permits.

"Blown cable" is a method of installing such fibre cables and minicables, using techniques and blowing heads much like that used for the more lightweight and flexible fibre units. This method is also known as "jetting". The blowing heads include drive wheels for driving the cable into the tube direct, and direct the supply of pressurised air from a compressor (typically 10 to 15 bar) into the bore of the conduit to provide the cable with a fluidised bed to help propel it along. However, such blowing heads have to be adapted for blowing the larger (in diameter), heavier and stiffer fibre cable and minicables, which are supplied in the form of a drum having significant mass on a cable drum trailer.

Obviously, the drive wheels, the tube or duct bores through the cable travels, and other components have be upsized to accommodate the larger diameter sizes and weights of fibre cable or minicable. Perhaps less obviously, the size and weight of the cable and the way it is supplied on large storage drums is such that the hauling off of cable from the supply drum requires that a high level of inertia be overcome. This resistance creates a kind of back tension on the cable which plays against the action of the drive wheels to drive the cable into the waiting tube. Thus the drive wheels haul the cable off the storage drum, the section of cable leading from the drum to the drive wheels of the blowing head is under considerable tension. This can be contrasted with the experience with blowing lightweight fibres or fibre units, where there is very little resistance or tension in the fibre as it is conveyed from the fibre storage pan to the drive wheels of the blowing head.

The problem is exacerbated by the cable coming off the drum being played out in an uneven, jerky manner. This is especially so when the end of a particular cable "layer" on the drum is reached. It is well known that while blowing fibres, especially through long tube routes (which currently could exceed 1 km in length), friction and other causes cause the fibre to suffer significant compression and tensile forces within the tube, causing the fibre to buckle. This may compromise the delicate fibre, as well as result in installation delay and or even for the session to be aborted and restarted. These issues are also experienced in installing blown cable (which shall in this description include both blown fibre cable and minicable).

Ideally, the cable should be blown into the tube as smoothly and evenly as possible, which is likely to be difficult given the propensity of the cable to be installed in a jerky manner into the tube at one end, and the uneven hauling off of the cable at the other end. To help smooth out the installation process at the tube end, the applicant has developed the current capping system blown fibres wherein the blowing head is capable of sensing an impending buckle - which is manifest in the form of a reduction in speed or cessation of movement of the fibre unit captured between the pair of drive wheels. When the impending buckle is sensed, the motor powering drive wheels reduce or stop the drive force which propels the fibre forward, as its current is capped.

In blown cable, however, the pulling and pushing (and any ancillary vibrational) forces inflicted on the cable at each end of the cable - frictional forces within the tube at one end, and inconsistent cable drum play out from the other - the resulting spasmodic cable action at the drive wheels of the blowing head plays havoc on the installation process. The cable itself undergoes considerable stress as well.

Examples of cable blowing heads are manufactured by Plumettez S.A. of Switzerland (the "MiniJet", where the driving means comprise a pair of motor-driven belts) and CBS Products Ltd of the UK (the "Breeze" cable blowing machine). To protect the cable, the cable blowing heads of the prior art are often configured so that the motors powering the drive wheels stall when the friction between the cable and the tube exceed a pre-sent limit. This is of course disruptive, and creates delay in the installation process.

There is therefore a need to address the problem of obtaining a smooth and even supply and conveyance of fibre cable or minicable to the driving mechanism of the blowing machine or head for installation using compressed air.

According to a first aspect of the invention, there is provided apparatus for installing a cable into a tube with the assistance of a fluid drag acting on the cable within the tube, the apparatus including:
- installation means for driving the cable into the tube, wherein in use the cable is resistant to being conveyed to the installation means, and
- reduction means for reducing the conveyance resistance of the cable.

This aspect of the invention is directed to reducing the amount of resistance in the form of inertia experienced when hauling the heavy cable off from the cable storage drum. By positively conveying the cable to the driving mechanism, this helps reduce the tension in the section of cable leading to the blowing head. Preferably the cable is conveyed using a pair of motorised wheels. Prior art blowing heads had to undertake what was essentially two tasks - the first to drive the cable into the tube or conduit, and a second being to haul the cable off the cable storage drum. The present invention divides the work so that the two tasks are dealt with by each set of wheels. With this arrangement, the conveying set of wheels which performs the hauling off isolates the tension in the cable from the driving set of wheels which installs the cable into the tube. The force or torque required by the driving set of wheels thus need not be shared, but can be spent more efficiently on just the installing process. A preferred embodiment of the invention further includes means for reducing the tension on the cable conveyed to the drive wheels. In one embodiment, this comprises means to create a bend of slack in the cable leading or being conveyed to the drive wheels, and further monitoring the slack to ensure that the slack stays within a range.

According to a second aspect of the invention, there is provided a module for use with blown cable installation apparatus for evenly conveying the cable to the installation means, the module including buffer means to accommodate unevenness in the conveying the cable to the installation means.

In this aspect of the invention, the module contributes to providing a smoother, more even provisioning of the cable to the drive wheels of the blowing head. In an embodiment of the invention where the module is used without the drive wheels of the other aspect of the invention, the buffer helps to shield the drive wheels from the spasmodic effects of the cable coming directly off the drum. In the preferred embodiment where the buffer is used with a second pair of drive wheels which convey the cable positively to the drive wheels, the buffer serves as an intermediate storage point between the two sets of wheels to take in slack "excess" cable, as well as to pay out cable, to compensate for when the two sets of wheels are travelling at different speeds.

A preferred mode of implementing this aspect of the invention is to use a moveable dancer arm which mandates a curve or bend in the path of the cable travelling to the drive wheels from the conveyance wheels which haul off the cable from the drum. The cable bend can be also be created by configuring the drive and conveyance wheels e.g. at angle at each other, to cause the relatively stiff cable to go through a curved path. Preferably, both methods for creating a slack or a bend in the cable are used together. In further embodiments of this aspect of the invention, means for controlling the extent of cable bend are provided, preferably in response to feedback about the speed at which any of the wheels are moving, the angle or level of bend or slack in the cable, and/or any other installation condition such as the presence of a cable buckle, and so on.

According to the invention, the conveying wheels can be used with any conventional type of blowing head drive wheels. Thus, the invention helps improve the blown cable installation process by ameliorating the effects of hauling off high-inertia cable and/or the uneven playout or feeding of the cable to the drive wheels. Preferably however, the drive wheels are configured so that the force driving the cable into the tube is constantly monitored so that an impending cable buckle indicated by a reduction in cable travel speed through the drive wheels can be responded to by a corresponding reduction in the driving force on the cable, along the lines of the current capping method. In such an embodiment, the buffer has especial utility in isolating the drive wheels from so that any changes in the cable movement sensed by the drive wheels can be attributed solely or mainly to cable movement within the tube, thus allowing a more accurate assessment of any impending problems.

According to a third aspect of the invention, there is provided a conveyance apparatus for use with installation means for installing a cable into a tube with the assistance of a fluid drag acting on the cable within the tube, wherein in use the cable is resistant to being conveyed to the installation means, the conveyance means including reduction means to reduce the conveyance resistance of the cable.

This aspect of the invention covers conveying means e.g. in the form of conveying wheels, which can be used with existing cable blowing heads, to take off the resistance or back tension pulling the cable in the direction opposite to the installation direction. As noted above, this can be used with any type of blowing head.

Methods corresponding to the apparatus of the invention are also provided.

The invention will now be described, by way of example only, with reference to the following drawings in which:
Figure 1 is a representation of the main components making up a conventional cable blowing head;
Figures 2 and 3 are embodiments of blowing heads according to the invention;
Figures 4 and 5 are views of another embodiment of a blowing head according to the invention.

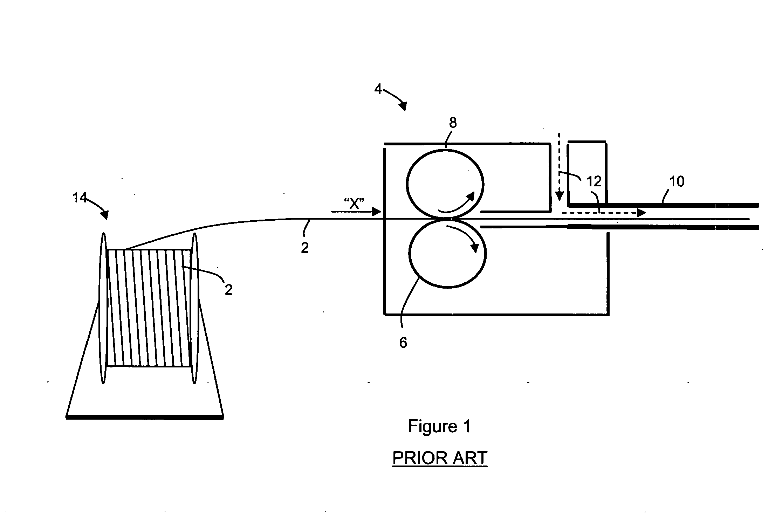

In a typical conventional blowing head (4) as shown in Figure 1, cable (2) is fed into one end of the blowing head and travels in the direction of arrow "X" through a bore extending the length of the head. The tube or duct (10) to be populated by the cable is connected to the blowing head at the other end of the bore. A pair of motorised drive wheels or belts (6, 8) engages with the cable, and drives it into the tube or conduit. At the same time, compressed air (12) from a compressor is fed into the blowing head via an "airbox" (into which is pumped the compressed air) and directed so that it travels along a section of the bore and into the tube. The highly-compressed air moves at speed into and through the tube, so as to create a fluid bed to carry the cable - which continues to be driven by the drive wheels - through the tube. As discussed above, friction may at some point start to overcome the fluid drag effect provided by the air movement within the tube, resulting in a slowing down or even stopping in the progress of the cable through the tube. Prior art blowing heads which do not monitor the progress of the cable which continue to drive the cable into the tube, thus requiring human or other intervention to stop the driving force to present a buckle or worse, physical damage to the cable.

Cable is supplied in a spooled form in a drum (14). In use, it is pulled off and gradually unwound from the drum as it is fed into the blowing head. Due to the relative weight and stiffness of the cable, and the mass and inertia of the drum (even when supported by a cable drum trailer so that it is free to rotate during the unwinding), a certain amount of force is required to pull the cable off to initially and subsequently convey to the blowing head. Furthermore, the cable is likely to be supplied to the blowing head at an uneven rate and speed. The drive wheels therefore need to cope with the tasks of pulling the cable off the drum and driving the cable into the tube, where the cable arrives for engagement with the drive wheels in a possibly spasmodic manner over time.

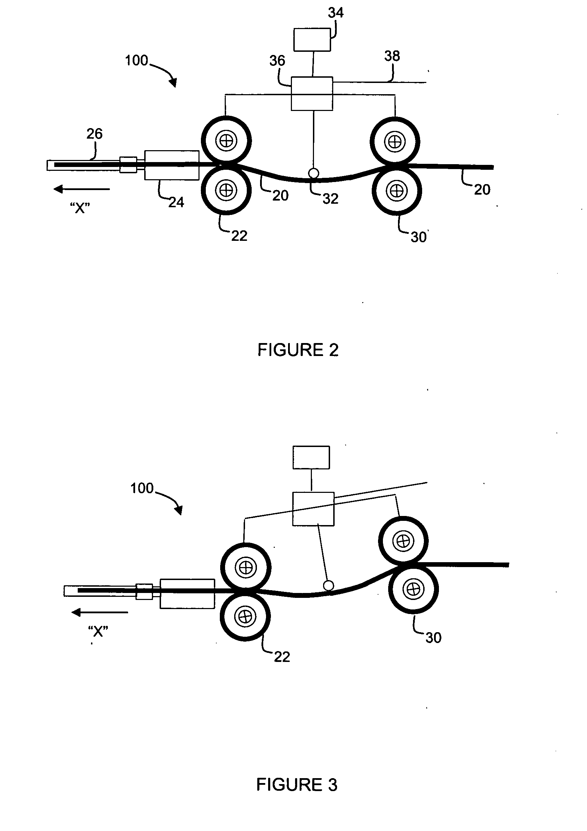

Figure 2 depicts a blowing head and apparatus (100) according to the invention. As is the case in the prior art blowing head depicted in Figure 1, cable (20) is driven in the direction of arrow "X" by hydraulically or electrically driven drive wheels or belts (22) into a tube (26) via an airbox (24) with the assistance of fluid drag provided by the direction of compressed air within the tube. The airbox through which the air is directed, and the tube connector with which the tube is connected to the blowing head, can be provided as modular units so that the same blowing head body can be used to blow in cables of various sizes into tube or duct of various sizes. These components are common to the blowing heads of the prior art.

The blowing head of the invention further includes a second pair of wheels or belts (30) which takes on the task of pulling or hauling cable off its storage drum. Like the drive wheels, these too are motorised, so that in use they pull the cable off the drum and propel it towards the tube. In the invention, these wheels or belts are powered independently from the first set of drive wheels (22). This is because different factors at each end of the blowing head will have different effects on the cable travelling through the apparatus. Thus, although it is desirable for the two sets of wheels to be travelling at exactly identical at the same time, this cannot be expected in practice at all times. The second power source for the conveying wheels or belts can comprise a single motor which will ensure that the two wheels making up the pair will move in sync with each other. If further torque is required, e.g. where the blowing head is to be used with a very high fibre count fibre cable, each wheel in the conveying pair can preferably be separately driven by a separate motor. Thus it is possible to provide a separate power source to each wheel or belt in the driving set (22), so that each of the four wheels in the blowing head is powered by an independent motor.

A slack control feedback mechanism (32) is provided at a point between the two set of wheels. In one embodiment, this element creates bend or a curve or a slack in this section of cable leading to the drive wheel. It also provides feedback to a cable installation controller (36) which controls and coordinates the operation of the cable drum drive wheels.

By bending the cable in the section between the two sets of wheels, a buffer zone is created between the two sources of cable disruption. As noted earlier, the cable is unlikely to be played out in a completely smooth and constant manner at either set of wheels, caused by and resulting in the respective set of wheels moving at different speeds. The deliberately-introduced slack isolates the two sets of wheels from each other, neutralising any tension that would otherwise be present in a straight length of cable stretched between them. One method of causing this section of cable to bend is to use a moveable dancer arm which would prescribe a minimum extent of bend in the cable. The skilled person would appreciate that other methods to create a bend in the cable are also possible, as discussed below in connection with Figure 3. Here, the dancer arm preferably includes the function of the slack control feedback mechanism (32). Preferably the system should be configured so that the cable is not excessively tightly engaged with the dancer arm as this would create tension along the cable.

Hence the dancer arm could be lightly configured so that it easily yields to forces causing the cable to straighten, while at the same time it could collect data about the level of cable slack for feedback purposes.

The drive transistors for both the cable installation drive wheels (22) and cable drum drive wheels (30) are accommodated in the drive wheel electronics (36), powered by a voltage source (38). The speed of the installation drive wheels (22) is controlled by a battery powered controller (34). Any excessive friction in the tube during the installation process can preferably be accommodated using current capping techniques to minimise or prevent any cable damage. Meanwhile, the speed of the back conveying wheels is regulated in dependence on the level of bend or slack in the cable between the two pairs of wheels.

The feedback mechanism (32) monitors this to ensure that a satisfactory level of slack is maintained within a range. If the slack level exceeds this range, a signal is sent back to the back conveying wheels (30) to increase its conveying speed (to increase the level of cable slack) or to decrease its conveying speed (to decrease the level of cable slack) as is required. This can be performed by using optical sensors placed in proximity to the cable curve e.g. at its greatest bend point. Alternatively potentiometers, such as Hall effect potentiometers, can be used as the feedback means. The feedback is sent to the cable drive wheel electronics (36), which controls the relative speed of the cable drum drive wheels (30) to ensure a sufficient level of cable slack between the two sets of drive wheels. The effect of this is that the front drive wheels (22) are "isolated" from the jerky cable feeding to back pair (30), thus the cable conveyed to the front drive wheels are at low tension. As briefly noted above, this arrangement has the additional effect of creating a buffer zone of a sort, wherein "excess" cable can be temporarily stored and taken from, during the process of installation.

A preferred embodiment of the invention is shown in Figure 3, which components are almost similar to the blowing head (100) of Figure 2, save that the conveying wheels (30) are positioned at an angle to the drive wheels (22) so that the cable travelling from one set to the second set of wheels is encouraged to naturally bend without need for any extraneous means.

Here, the dancer arm does not create or maintain the bend in the cable as its main task. In this embodiment it serves chiefly as a slack control feedback mechanism (32) to regulate and adjust the relative speeds of the back conveying wheels (30) to ensure that the desired level of slack is maintained between the two wheel sets.

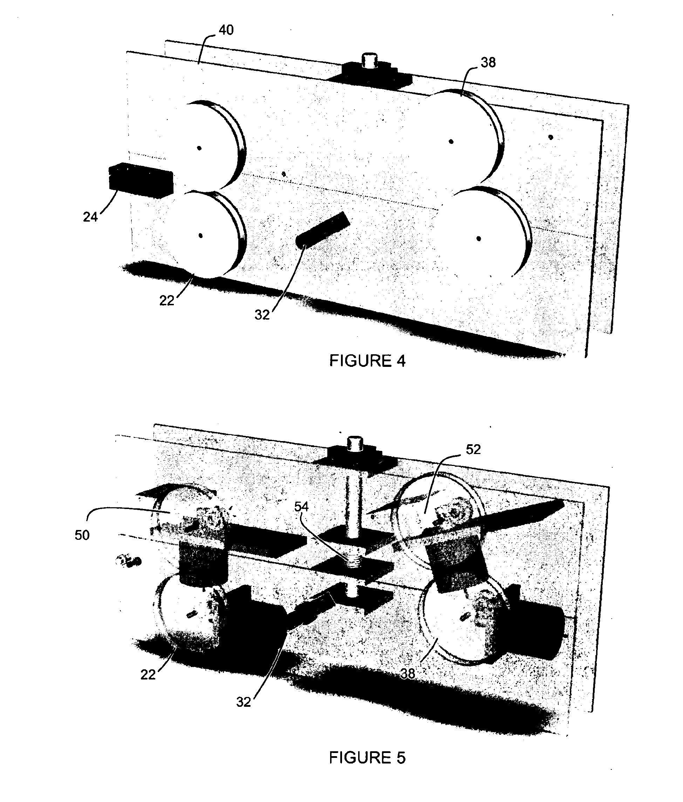

Two views of the "angled" embodiment of the blowing head (100) discussed above in connection with Figure 3 are shown in Figures 4 and 5. Figure 4 shows the drive wheels (22) mounted on the blowing head housing (40), and the airbox (24) through which the cable and a supply of compressed air is directed. Conveying wheels (38) are disposed relative to the drive wheels so that a relatively stiff or rigid fibre cable or minicable goes through a path which includes a curve which creates a buffer or temporary storage zone between the two sets of wheels. The slack control feedback mechanism (32) is configured to move in response to any change in the slack level in the cable, which feedbacks the change to allow the relative speed of the two sets of wheels to be adjusted to maintain the slack or bend.

Figure 5 depicts the mountings of some of the components in the blowing head. These are spring-loaded to engage with the cable in an adjustable manner which can not only accommodate differently-sized cables in different installation sessions, but also cope with variations in the outer dimensions of the same one cable during a single installation session. Springs (50, 52) for the drive wheels and conveying wheels respectively, serve this purpose. The slack control feedback means (32) is also in this embodiment spring-loaded (54) to provide the system with feedback about the bend level.

The skilled person would recognise that a number of variations and alternatives based on the invention are possible to the devices, apparatus, methods, manufacturing methods and materials used. It is possible also to envisage other purposes, aims and environments to which these devices, methods and the like, may be applied. Accordingly, this invention is not limited to the particular set up and applications described herein.

## Claims

1. Apparatus for installing a cable into a tube with the assistance of a fluid drag acting on the cable within the tube, the apparatus including:
- installation means for driving the cable into the tube, wherein in use the cable is resistant to being conveyed to the installation means, and
- reduction means for reducing the conveyance resistance of the cable.

2. Apparatus according to claim 1 wherein the reduction means includes conveyance means to positively convey the cable to the installation means.

3. Apparatus according to claim 2 wherein the conveyance means comprises wheels configured to engage with the cable to positively convey the cable to the installation means.

4. Apparatus according to claim 3 wherein the wheels are each independently powered.

5. A module for use with apparatus according to any one of claims 1 to 4 for evenly conveying the cable to the installation means, the module including buffer means to accommodate unevenness in the conveying the cable to the installation means.

6. A module according to claim 5 wherein the buffer means is further configured to accommodate unevenness in the driving of the cable from the installation means.

7. Apparatus according to any one of claims 1 to 4, further including a module according to claim 5 or claim 6, wherein the buffer means is configured to create a bend in a section of cable located between the installation means and the conveyance means.

8. Apparatus according to claim 7 wherein the buffer means comprises a moveable dancer arm configured to define a minimum bend level of the cable.

9. Apparatus according to claim 7 or claim 8 wherein the buffer means comprises a configuration of the conveyance means at an angle to the installation means so that in use a bend is created in a section of cable located between the installation means and the conveyance means.

10. Apparatus according to any one of claims 7 to 9 further including a feedback device, wherein the buffer means is further configured to control a level of the bend based on output from the feedback device.

11. Apparatus according to claim 10 wherein the feedback device comprises an optical sensor configured to sense the level of the bend.

12. Apparatus according to claim 10 wherein the feedback device comprises a potentiometer configured to sense a conveying speed of the conveyance means and an installing speed of the installation device.

13. Apparatus according to any preceding claim wherein the installation means is powered by means configured to reduce an installation speed or to stop driving the cable into the tube upon detection of a reduction of speed at which the cable is travelling into the tube.

14. Conveyance apparatus for use with installation means for installing a cable into a tube with the assistance of a fluid drag acting on the cable within the tube, wherein in use the cable is resistant to being conveyed to the installation means, the conveyance means including reduction means to reduce the conveyance resistance of the cable.

15. A method of installing a cable into a tube with the assistance of a fluid drag acting on the cable within the tube, including the steps of:
- driving the cable into the tube, wherein in use the cable is resistant to being conveyed to the installation means, and
- reducing the conveyance resistance of the cable.

16. A method according to claim 15 wherein the reducing step comprises positively convey the cable to the installation means.

17. A method according to claim 16 wherein the conveying step comprises using wheels engaging with the cable to positively convey the cable to the installation means.

18. A method according to any one of claims 15 to 17, further including the step of evenly conveying the cable to the installation means by using buffer means to accommodate unevenness in the conveying the cable to the installation means.

19. A method according claim 18, further including the step of using the buffer means to accommodate unevenness in the conveying the cable to the installation means.

20. A method according to claim 18 or claim 19 wherein the step of using the buffer means comprises creating a bend in a section of cable located between the installation means and the conveyance means.

21. A method according to any one of claims 15 to 20 wherein the step of using the buffer means includes a step of controlling a level of the bend based on output from a feedback device.

22. A method according to any of claims 15 to 21 wherein the installing step includes reducing an installation speed or to stop driving the cable into the tube upon detection of a reduction of speed at which the cable is travelling into the tubes.
